(19) Europäisches Patentamt
European Patent Office
Office européen des brevets

(11) **EP 3 860 867 B1**

(12) **FASCICULE DE BREVET EUROPEEN**

(45) Date de publication et mention
de la délivrance du brevet:
**29.11.2023 Bulletin 2023/48**

(21) Numéro de dépôt: **19783015.1**

(22) Date de dépôt: **02.10.2019**

(51) Classification Internationale des Brevets (IPC):
***B60C 23/04*** *(2006.01)*

(52) Classification Coopérative des Brevets (CPC):
**B60C 23/0427; B60C 23/0408; B60C 23/0428;
B60C 23/043; B60C 23/0432; B60C 23/0488;
B60C 23/0489**

(86) Numéro de dépôt international:
**PCT/EP2019/076783**

(87) Numéro de publication internationale:
**WO 2020/070232 (09.04.2020 Gazette 2020/15)**

(54) **DISPOSITIF DE MESURE DE LA PRESSION D'UN PNEUMATIQUE**

REIFENDRUCKÜBERWACHUNGSSYSTEM

TIRE PRESSURE MONITORING SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.10.2018 FR 1859256**

(43) Date de publication de la demande:
**11.08.2021 Bulletin 2021/32**

(73) Titulaires:
• **Safran Landing Systems**
  **78140 Vélizy-Villacoublay (FR)**
• **SAFRAN ELECTRONICS & DEFENSE**
  **92100 Boulogne Billancourt (FR)**

(72) Inventeurs:
• **ZABULON, Joël**
  **77550 Moissy-Cramayel (FR)**
• **LEVAVASSEUR, Didier**
  **92100 Boulogne-Billancourt (FR)**

(74) Mandataire: **Lavaud, Thomas**
  **Cabinet Boettcher**
  **5, rue de Vienne**
  **75008 Paris (FR)**

(56) Documents cités:
**EP-A2- 1 223 057     WO-A1-2006/063970
DE-T2- 69 907 375**

**Description**

L'invention concerne le domaine des dispositifs de mesure de la pression d'un pneumatique d'une roue montée sur un essieu d'un véhicule.

ARRIERE PLAN DE L'INVENTION

Un aéronef moderne est classiquement équipé d'un système de surveillance automatique de la pression régnant à l'intérieur des pneumatiques des roues de l'aéronef (on parle aussi de TPMS, pour *Tire Pressure Monitoring System*). Le système de surveillance comporte, pour chaque roue, un capteur de pression situé sur la roue. Le système de surveillance comporte aussi des moyens de transmission pour transmettre les données de mesure de pression à l'avionique, dans le but de fournir un affichage en temps réel de la pression de chaque roue ou bien une information de bon fonctionnement associée à chaque roue.

L'une des difficultés principales de mise en oeuvre de ce système de surveillance de la pression réside dans le fait que, pour chaque roue, les données de mesure de pression doivent être transmises depuis le capteur de pression, en rotation avec la roue, vers l'intérieur du fuselage de l'aéronef. Les moyens de transmission ne peuvent donc pas utiliser une transmission filaire. Les moyens de transmission mettent donc en œuvre une transmission sans fil utilisant des ondes radios pour véhiculer les données de mesure de pression depuis le capteur de pression.

Pour alimenter le capteur de pression et les moyens de transmission, il a été envisagé d'équiper la roue d'une pile fournissant de l'énergie électrique. Une telle solution nécessite cependant des opérations de maintenance fréquentes, puisqu'il convient de prévoir des remplacements réguliers de la pile avant sa décharge pour éviter les interruptions de service. De plus, l'utilisation d'une pile est difficilement compatible avec les températures susceptibles de régner à proximité d'une roue d'aéronef (possiblement très élevées au cours de certains freinages et très basses en altitude).

Le système de surveillance de la pression doit par ailleurs cohabiter avec un système de mesure de la vitesse angulaire des roues. Les données de mesure de vitesse angulaire sont utilisées notamment pour mettre en oeuvre une fonction d'anti-patinage.

Ces deux systèmes nécessitent chacun des équipements positionnés à proximité des roues.

Ces équipements peuvent notamment être situés à l'intérieur et à l'extrémité des essieux. L'intégration de ces équipements est complexe à réaliser, car l'espace disponible est très réduit.

On cherche aussi à réduire autant que possible la masse de ces équipements. En effet, comme un aéronef peut comporter un nombre de roues relativement important (22 roues sur l'Airbus A380 par exemple), l'impact total de la masse de ces équipements est important.

Les documents suivants WO 2006/063970 A1, EP 1 223 057 A2 et DE 699 07 375 T2 peuvent être cités comme art antérieur.

OBJET DE L'INVENTION

L'invention a pour objet un dispositif de mesure de la pression d'une roue, fonctionnant sans pile, présentant une masse réduite, et susceptible d'être intégré efficacement avec un dispositif de mesure de la vitesse angulaire de la roue.

RESUME DE L'INVENTION

) En vue de la réalisation de ce but, on propose un dispositif de mesure de la pression d'un pneumatique d'une roue montée sur un essieu d'un véhicule, comme défini dans la revendication indépendante 1 en annexe.

Dans le dispositif de mesure selon l'invention, le capteur de pression est alimenté par la partie fixe via le canal de communication sans fil, de sorte qu'une pile n'est pas nécessaire.

Les enroulements du canal de communication sans fil sont définis par des pistes formées sur les circuits imprimés, et sont donc peu encombrants et peu volumineux.

Il est par ailleurs possible de définir sur les circuits imprimés d'autres pistes remplissant d'autres fonctions, par exemple des pistes permettant de produire des mesures de vitesse angulaire de la roue. On intègre ainsi très efficacement les fonctions de mesure de pression et de mesure de vitesse angulaire. En particulier, la masse et l'encombrement de ces fonctions sont réduits, les interfaces électriques et mécaniques sont simplifiées, les interférences mécaniques, électriques et électromagnétiques sont maîtrisées.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

- la figure 1 représente une roue d'aéronef et un dispositif de mesure selon l'invention ;
- la figure 2 représente un premier enroulement, un deuxième enroulement, une première unité de traitement et une deuxième unité de traitement du dispositif de mesure selon l'invention ;
- la figure 3 représente une tension d'excitation aux bornes du premier enroulement (en ordonnée) en fonction du temps (en abscisse), la tension d'excitation étant modulée par un signal reçu ;
- la figure 4 représente une tension d'excitation aux bornes du premier enroulement en fonction du temps, la tension d'excitation étant modulée par un signal émis ;
- la figure 5 représente une tension induite aux bornes du deuxième enroulement en fonction du temps, la tension induite étant modulée par un signal reçu ;
- la figure 6 représente le premier circuit imprimé sur lequel sont formées une première piste et des troisièmes pistes, et le deuxième circuit imprimé sur lequel sont formées une deuxième piste et des quatrièmes pistes ;
- la figure 7 représente la première piste, la deuxième piste, les troisièmes pistes et les quatrièmes pistes superposées ;
- la figure 8 représente un graphique contenant des courbes représentant des signaux de mesure captés par des motifs de mesure du dispositif de mesure.

DESCRIPTION DETAILLEE DE L'INVENTION

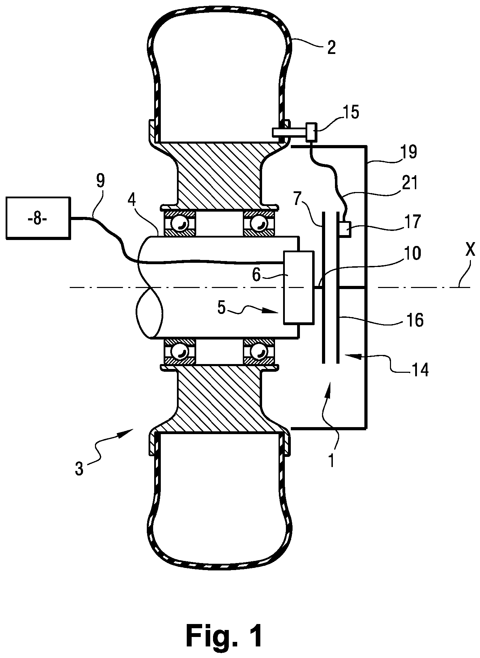

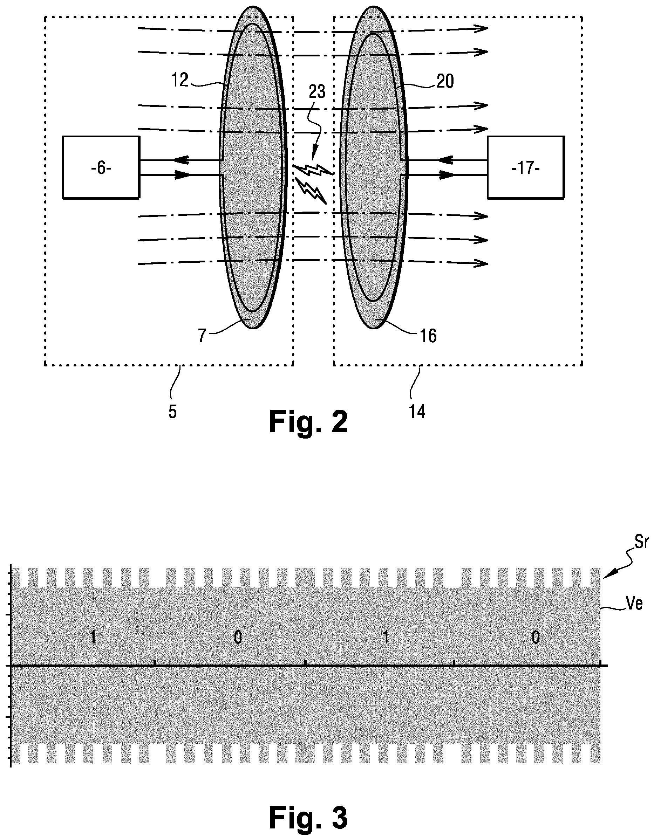

En référence aux figures 1 et 2, le dispositif de mesure selon l'invention 1 est tout d'abord destiné à mesurer la pression régnant à l'intérieur d'un pneumatique 2 d'une roue 3 d'un aéronef. La roue 3 est montée sur un essieu 4 situé au bas d'un atterrisseur de l'aéronef.

Le dispositif de mesure 1 comporte une partie fixe 5 qui est solidarisée à l'essieu 4. La partie fixe 5 comprend une première unité de traitement 6 et un premier circuit imprimé 7.

La première unité de traitement 6 est ici située à l'intérieur de l'essieu 4, à proximité de l'extrémité de l'essieu 4 et donc de la roue 3. La première unité de traitement 6 est reliée à un calculateur 8 (ou à un concentrateur de données), situé dans le fuselage de l'aéronef, par un premier câble 9 cheminant partiellement à l'intérieur de l'essieu 4. Le calculateur 8 transmet ou exploite les données de mesure de pression produites par le dispositif de mesure 1, de sorte que ces données de mesure de pression peuvent être utilisées pour surveiller automatiquement la pression du pneumatique 2 de la roue 3. La première unité de traitement 6 comporte notamment un premier émetteur/récepteur.

Le premier circuit imprimé 7 présente ici une forme annulaire. Le premier circuit imprimé 7 est situé à proximité de l'extrémité de l'essieu 4, ici à l'extérieur de l'essieu 4 (mais il pourrait aussi être situé à l'intérieur de l'essieu 4). Le premier circuit imprimé 7 est relié par un deuxième câble 10 à la première unité de traitement 6. Le premier circuit imprimé 7 est perpendiculaire à l'axe de rotation X de la roue 3 (et donc à un axe de l'essieu 4). Les faces du premier circuit imprimé 7 sont donc sensiblement parallèles aux faces de la roue 3.

Une première piste 12 est formée sur le premier circuit imprimé 7. La première piste 12 est ici gravée sur le premier circuit imprimé 7. La première piste 12 définit un premier enroulement qui présente un premier axe de révolution confondu avec l'axe de rotation X de la roue 3.

Le premier circuit imprimé 7 comporte aussi un ou plusieurs premiers condensateurs montés en série ou en parallèle avec le premier enroulement. Le premier enroulement et les premiers condensateurs forment un premier circuit de transmission.

Le dispositif de mesure 1 comporte de plus une partie mobile 14 destinée à être entraînée en rotation par la roue 3. La partie mobile 14 comprend un capteur de pression 15, un deuxième circuit imprimé 16 et une deuxième unité de traitement 17.

Le capteur de pression 15 est positionné sur une jante de la roue 3 et est agencé pour réaliser des mesures de pression régnant à l'intérieur du pneumatique 2 de la roue 3.

Le deuxième circuit imprimé 16 présente ici une forme annulaire. Le deuxième circuit imprimé 16 est fixé à un capot de roue 19 destiné notamment à protéger l'intérieur de l'essieu 4. Lorsque la roue 3 est montée sur l'essieu 4 et que le capot de roue 19 est monté contre la roue 3, le deuxième circuit imprimé 16 est situé à l'extrémité de l'essieu 4, ici à l'extérieur de l'essieu 4 (mais il pourrait aussi être situé à l'intérieur de l'essieu 4 avec le premier circuit imprimé 7), en étant parallèle au premier circuit imprimé 7. Le premier circuit imprimé 7 et le deuxième circuit imprimé 16 sont situés en face l'un de l'autre, à une distance typiquement comprise entre 0,5 et 10mm.

Une deuxième piste 20 est formée sur le deuxième circuit imprimé 16. La deuxième piste 20 est ici gravée sur le deuxième circuit imprimé 16. La deuxième piste 20 définit un deuxième enroulement qui présente un deuxième axe de révolution confondu avec l'axe de rotation X de la roue 3.

Le deuxième circuit imprimé 16 comporte aussi un ou plusieurs premiers condensateurs montés en série ou en parallèle avec le deuxième enroulement. Le deuxième enroulement et les deuxièmes condensateurs forment un deuxième circuit de transmission.

La deuxième unité de traitement 17 comporte des composants électriques qui sont ici montés sur le deuxième circuit imprimé 16. La deuxième unité de traitement 17 comporte notamment un deuxième émetteur/récepteur.

La deuxième unité de traitement 17 est reliée par un troisième câble 21 au capteur de pression 15.

On décrit maintenant la manière dont fonctionne le dispositif de mesure 1 pour mesurer la pression du pneumatique 2 de la roue 3 et pour transmettre les données de mesure de pression au calculateur 8.

Le premier enroulement et le deuxième enroulement sont couplés électromagnétiquement pour former un canal de communication sans fil 23. Le premier circuit de transmission et le deuxième circuit de transmission forment un premier circuit résonant à une certaine fréquence de résonance, ce qui permet de maximiser le couplage inductif entre le premier circuit imprimé 7 et le deuxième circuit imprimé 16. La fréquence de résonance est typiquement comprise entre 1MHz et 20MHz, et est ici égale à 13,56MHz. Cette fréquence de 13,56MHz est notamment utilisée par la technologie NFC (pour *Near Field Communication*).

L'accord du premier circuit résonant est réalisé en ajustant les valeurs de capacité des premiers condensateurs, la valeur de l'inductance du premier enroulement, les valeurs de capacité des deuxièmes condensateurs, et la valeur de l'inductance du deuxième enroulement. Le réglage tient compte notamment de la distance entre le premier circuit imprimé 7 et le deuxième circuit imprimé 16 et de la distance entre chaque enroulement et tout élément métallique quelconque (capot de roue 19, essieu 4, jante de la roue 3, etc.).

En référence à la figure 3, le premier émetteur/récepteur de la première unité de traitement 6 applique une tension d'excitation Ve aux bornes du premier enroulement et génère ainsi un courant d'excitation, à la fréquence de résonance, qui circule dans le premier enroulement.

Le courant d'excitation génère, du fait du couplage électromagnétique entre le premier enroulement et le deuxième enroulement, un courant induit qui circule dans le deuxième enroulement. Une tension induite est ainsi produite aux bornes du deuxième enroulement.

La deuxième unité de traitement 17 redresse la tension induite et la convertit en une tension d'alimentation continue qui alimente la deuxième unité de traitement 17 et le capteur de pression 15. La deuxième unité de traitement 17 et le capteur de pression 15 sont donc alimentés électriquement par la partie fixe 5 via le canal de communication sans fil 23.

La deuxième unité de traitement 17 acquiert, via le troisième câble 21, les mesure de pression, puis les numérise pour produire des données de mesure de pression.

La deuxième unité de traitement 17 produit alors des données montantes numériques comprenant les données de mesure de pression ainsi que, possiblement d'autres données, par exemple des données de BITE (pour *Built-In Test*) de la deuxième unité de traitement 17 et/ou du capteur de pression 15.

Le deuxième émetteur/récepteur de la deuxième unité de traitement 17 transmet alors les données montantes à la première unité de traitement 6 en modulant l'impédance d'entrée du deuxième circuit de transmission.

La modulation de l'impédance du deuxième circuit de transmission est réalisée en connectant ou en déconnectant sélectivement un deuxième condensateur particulier du reste du deuxième circuit de transmission.

La connexion a pour effet soit d'adapter soit de désadapter l'impédance, selon que l'impédance a été réglée pour être adaptée avec ou sans ce deuxième condensateur particulier. La déconnexion produit l'effet inverse.

Une désadaptation de l'impédance du deuxième circuit de transmission résulte en une désadaptation du premier circuit résonant. Ainsi, la modulation de l'impédance du deuxième circuit de transmission a pour effet de moduler la tension induite aux bornes du deuxième enroulement, de moduler l'impédance du premier circuit résonant, et donc de moduler aussi l'amplitude de la tension d'excitation Ve aux bornes du premier enroulement. Un signal reçu Sr est ainsi superposé à la tension d'excitation Ve aux bornes du premier enroulement et module la tension d'excitation Ve, ledit signal reçu Sr contenant les données montantes.

On utilise ici par exemple une modulation BPSK (pour *Binary Phase Shift Keying*) qui permet de transférer des données en technologie NFC de type B. Comme on le voit sur la figure 3, la transmission d'un bit égal à 1 nécessite la transmission d'une première séquence d'états hauts et d'états bas, et la transmission d'un bit égal à 0 nécessite la transmission d'une deuxième séquence d'états hauts et d'états bas.

L'émission d'un état bas est réalisée en désadaptant le deuxième circuit de transmission, alors que l'émission d'un état haut est réalisée sans désadapter le deuxième circuit de transmission.

Les données montantes sont donc transmises à la partie fixe 5 par la deuxième unité de traitement 17 via le canal de communication sans fil 23.

Le premier émetteur/récepteur réalise alors une démodulation de la tension d'excitation Ve et du signal reçu Sr pour acquérir les données montantes comprenant les données de mesure de pression.

La première unité de traitement 6 transmet alors les données de mesure de pression au calculateur 8.

Il est aussi possible que la première unité de traitement 6 transmette des données descendantes à la deuxième unité de traitement 17 via le canal de communication sans fil 23.

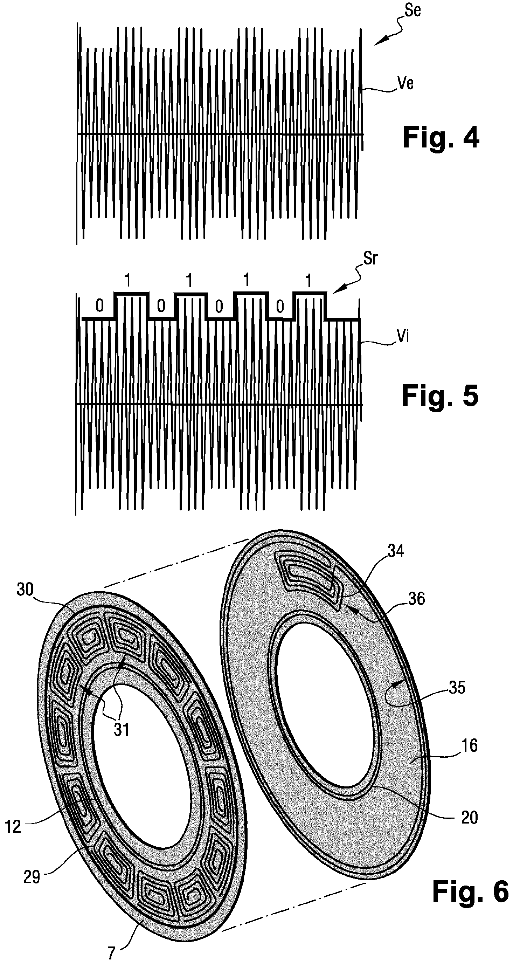

On voit sur les figures 4 et 5 un exemple de mise en oeuvre d'une telle transmission. La transmission utilise cette fois non pas une modulation BPSK mais une simple modulation d'amplitude.

Le premier émetteur/récepteur de la première unité de traitement 6 module l'impédance du premier circuit de transmission pour transmettre un signal émis Se contenant les données descendantes.

Une désadaptation de l'impédance du premier circuit de transmission résulte en une désadaptation du premier circuit résonant. Ainsi, la modulation de l'impédance du premier circuit de transmission a pour effet de moduler, avec le signal émis Se, la tension d'excitation Ve aux bornes du premier enroulement, de moduler l'impédance du premier circuit résonant, et donc de moduler aussi l'amplitude de la tension induite Vi aux bornes du deuxième enroulement. Un signal reçu Sr est ainsi superposé à la tension induite Vi aux bornes du deuxième enroulement et module la tension induite Vi, ledit signal reçu Sr contenant les données descendantes.

Le deuxième émetteur/récepteur réalise alors une démodulation de la tension induite Vi et du signal reçu Sr pour acquérir les données descendantes. La deuxième unité de traitement 17 reçoit ainsi des données descendantes transmises par la partie fixe 5 via le canal de communication sans fil 23, par modulation d'une impédance du premier circuit de transmission.

Le dispositif de mesure 1 est aussi destiné à mesurer une position angulaire et/ou une vitesse angulaire de la roue 3.

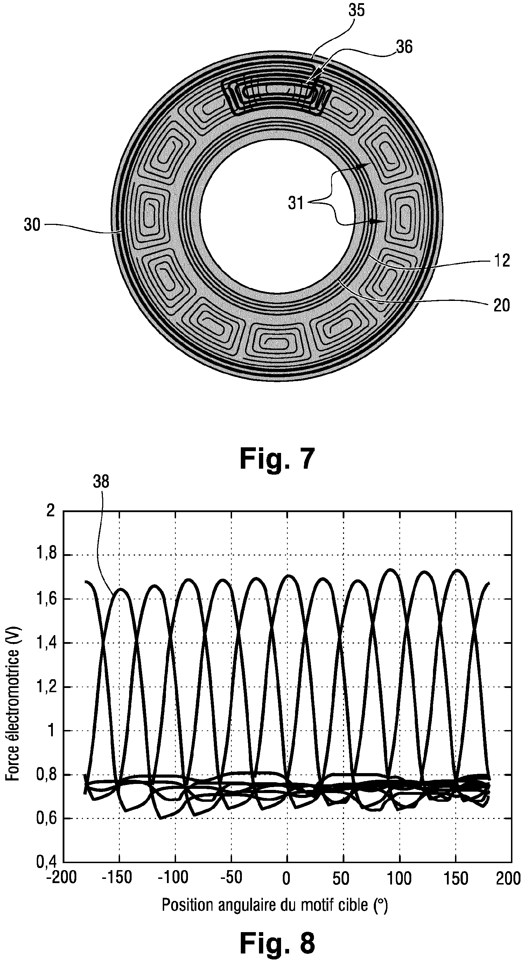

En référence aux figures 6 et 7, des troisièmes pistes 29 en cuivre sont formées sur le premier circuit imprimé 7. Les troisièmes pistes 29 sont ici gravées sur le premier circuit imprimé 7. Les troisièmes pistes 29 définissent un motif d'émission 30 et une pluralité de motifs de mesure 31, en l'occurrence douze motifs de mesure 31.

Le motif d'émission 30 s'étend à proximité d'une circonférence du premier circuit imprimé 7, et les motifs de mesure 31 sont répartis angulairement de manière régulière à proximité de la circonférence du premier circuit imprimé 7.

Le motif d'émission 30 présente un axe de révolution. Lorsque le dispositif de mesure 1 est installé sur l'atterrisseur, l'axe de révolution est confondu avec l'axe de rotation X de la roue 3, c'est à dire avec l'axe de l'essieu 4. Le motif d'émission 30 est ici un enroulement comprenant plusieurs spires formées par une troisième piste 29 sur le premier circuit imprimé 7. Les spires forment chacune un cercle de diamètre proche du grand diamètre du premier circuit imprimé 7.

Chaque motif de mesure 31 est ici un enroulement comprenant plusieurs spires formées par une troisième piste 29 sur le premier circuit imprimé 7.

La première unité de traitement 6 est reliée au motif d'émission 30 et aux motifs de mesure 31.

Des quatrièmes pistes en cuivre 34 sont formées sur le deuxième circuit imprimé 16. Les quatrièmes pistes 34 sont ici gravées sur le deuxième circuit imprimé 16. Les quatrièmes pistes 34 définissent un motif de réception 35 et un motif cible 36.

Le motif de réception 35 s'étend à proximité d'une circonférence du deuxième circuit imprimé 16, et le motif cible 36 est positionné à proximité de la circonférence du deuxième circuit imprimé 16. Le motif de réception 35 et le motif cible 36 sont reliés par des quatrièmes pistes 34.

Le motif de réception 35 présente un axe de révolution confondu avec l'axe de rotation X de la roue 3, c'est à dire avec l'axe de l'essieu 4. Le motif de réception 35 est ici un enroulement comprenant plusieurs spires formées par une quatrième piste 34 sur le deuxième circuit imprimé 16.

Les spires forment chacune un cercle de diamètre proche du grand diamètre du deuxième circuit imprimé 16.

Le motif cible 36 est ici un enroulement comprenant plusieurs spires formées par une quatrième piste 34 sur le deuxième circuit imprimé 16.

La première unité de traitement 6 génère un signal d'excitation et excite le motif d'émission 30 avec le signal d'excitation. Le signal d'excitation est un signal électrique alternatif à haute fréquence. Le premier circuit imprimé 7 et le deuxième circuit imprimé 16 sont couplés électromagnétiquement de sorte que, lorsque le motif d'émission 30 est excité par le signal d'excitation, un signal induit est reçu par le motif de réception 35. Le couplage électromagnétique est un couplage inductif.

Le signal induit comporte un courant I(t) circulant dans le motif de réception 35 et dans le motif cible 36 du deuxième circuit imprimé 16.

L'excitation du motif cible 36 par le courant I(t) produit un champ magnétique $B(t)$ en un point M de l'espace (loi de Biot et Savart) :

$$\overrightarrow{B(t)} = \frac{\mu_0}{4\pi} \int_P I(t).\overrightarrow{dl} \wedge \frac{\overrightarrow{PM}}{PM^3} = \frac{\mu_0}{4\pi} I(t) \int_P \overrightarrow{dl} \wedge \frac{\overrightarrow{PM}}{PM^3}$$

Ce champ magnétique $B(t)$ génère l'apparition d'une force électromotrice dans chaque enroulement des motifs de mesure 31 du premier circuit imprimé 7 (loi de Lenz-Faraday). La force électromotrice apparaissant sur chaque enroulement des motifs de mesure 31 est fonction du flux magnétique $\phi(t)$ qui traverse l'enroulement :

$$e = -\frac{d\phi}{dt}$$

Le flux magnétique à travers chaque enroulement est :

$$\phi(t) = \iint_S \vec{B}(t).d\vec{S} = \frac{\mu_0}{4\pi} I(t). \iint_S \int_P (d\vec{l} \wedge \frac{\overrightarrow{PM}}{PM^{3)}}).d\vec{S},$$

où $\vec{S}$ est le vecteur surface normal à l'enroulement.

En considérant le système comme quasi-stationnaire, on peut calculer, pour un enroulement d'un motif de mesure 31 particulier, un ensemble de k valeurs correspondant à k positions différentes du motif cible 36 :

$$L_k = \frac{\mu_0}{4\pi}. \iint_S \int_P (d\vec{l} \wedge \frac{\overrightarrow{PM}}{PM^{3)}}).d\vec{S}$$

Ces termes $L_k$ représentent l'inductance mutuelle entre l'enroulement du motif cible 36 et l'enroulement du motif de mesure 31 selon les positions du motif cible 36.

La force électromotrice résultante est donc :

$$e(t) = -L_k.\frac{dI(t)}{dt}.$$

*I(t)* et *e(t)* sont des grandeurs électrique sinusoïdales à la fréquence f=ω/2Π. La force électromotrice mesurée sur chaque enroulement d'un motif de mesure 31 est donc :

$$e = -jL_k.\omega I.$$

Ainsi, pour une valeur de courant donnée et à une fréquence donnée, e est fonction de la position relative du motif cible 36 par rapport au motif de mesure 31.

La première unité de traitement 6 acquiert les signaux de mesure associés à tous les motifs de mesure 31. Chaque signal de mesure est une force électromotrice.

On voit sur la figure 8 que la force électromotrice mesurée pour un motif de mesure 31 donné dépend de la position angulaire du motif cible 36 et donc du deuxième circuit imprimé 16 par rapport audit motif de mesure 31 donné. Ainsi, on observe par exemple que la courbe 38 de la force électromotrice mesurée pour un motif de mesure 31 positionné à -150° est croissante lorsque la position angulaire du motif cible 36 se rapproche de -150°, atteint un maximum lorsque la position angulaire du motif cible 36 atteint -150°, puis décroît lorsque la position angulaire du motif cible 36 s'éloigne de -150°.

Suite à l'acquisition des signaux de mesure, la première unité de traitement 6 mesure les amplitudes des signaux de mesure et détermine, parmi les signaux de mesure, un premier signal de mesure capté par un premier motif de mesure 31. Le premier motif de mesure est le motif de mesure le plus proche du motif cible 36, et le premier signal de mesure est, parmi tous les signaux de mesure, le signal de mesure qui présente une amplitude maximale.

La détermination du premier motif de mesure et la connaissance de la position angulaire dudit premier motif de mesure permettent de définir la position angulaire du motif cible 36 à 2Π/N près, où N est le nombre de motifs de mesure 31 (ici, N=12). La position angulaire de chaque motif de mesure 31 peut donc être estimée par la formule 2k.Π/N, k étant un indice associé audit motif de mesure 31.

La première unité de traitement 6 utilise alors la position angulaire du motif cible 36 pour déterminer la position angulaire du deuxième circuit imprimé 16, la position angulaire de la roue 3 et la vitesse angulaire de la roue 3.

Le dispositif de mesure selon l'invention 1 est donc adapté à la fois à mesurer la pression du pneumatique 2 de la roue 3 et à mesurer la position angulaire et la vitesse angulaire de la roue 3.

Les fréquences de transmission utilisées pour ces fonctions sont choisies de façon à éviter les interférences.

Comme on l'a vu plus tôt, le premier circuit résonant utilisé pour la mesure de pression est accordé sur une fréquence de résonance de 13,56MHz.

Les enroulements utilisés pour la mesure de la position angulaire et de la vitesse angulaire forment un deuxième circuit résonant accordé sur une fréquence de résonance différente. On choisit par exemple une fréquence de résonance de 5MHz pour le deuxième circuit résonant. Ce choix permet de rejeter les harmoniques à 10MHz et 15MHz du circuit de mesure de vitesse angulaire hors de la bande utile du circuit de mesure de pression, autour de 13.56 MHz.

Bien entendu, l'invention n'est pas limitée au mode de réalisation décrit mais englobe toute variante entrant dans le champ de l'invention telle que définie par les revendications.

Le dispositif de mesure selon l'invention peut bien sûr être utilisé sur tout type de roue de tout type de véhicule.

La première unité de traitement pourrait être formée entièrement ou partiellement sur le premier circuit imprimé, ou bien être éloignée de l'extrémité de l'essieu et située par exemple entièrement ou partiellement dans le fuselage de l'aéronef. De même, la deuxième unité de traitement peut être formée entièrement ou partiellement sur le deuxième circuit imprimé, ou bien comprendre une autre carte électrique située à proximité, par exemple sur le capot de roue ou sur le capteur.

La première unité de traitement et la deuxième unité de traitement peuvent aussi bien être très complexes que très simples.

Par exemple, la deuxième unité de traitement pourrait comporter des composants de traitement complexes (microcontrôleur, FPGA, etc.), un convertisseur analogique numérique, un émetteur/récepteur complexe, etc. Mais la deuxième unité de traitement pourrait aussi être beaucoup plus simple et adaptée uniquement à moduler l'impédance du deuxième circuit de transmission à partir de données de mesure de pression analogiques ou numériques produites par le capteur de pression.

**Revendications**

1. Dispositif de mesure de la pression d'un pneumatique (2) d'une roue (3) montée sur un essieu (4) d'un véhicule, le dispositif de mesure comportant une partie fixe (5) destinée à être solidarisée à l'essieu et une partie mobile (14) destinée à être entraînée en rotation par la roue, **caractérisé en ce que** la partie fixe comprend un premier circuit imprimé (7) sur lequel est formée au moins une première piste (12) définissant un premier enroulement, la partie mobile comprenant un deuxième circuit imprimé (16) sur lequel est formée au moins une deuxième piste (20) définissant un deuxième enroulement, le deuxième circuit imprimé étant agencé pour être relié à un capteur de pression (15), le premier enroulement et le deuxième enroulement étant couplés électromagnétiquement pour former un canal de communication sans fil (23), le dispositif de mesure étant agencé de sorte que le capteur de pression est alimenté électriquement par la partie fixe via le canal de communication sans fil (23), et de sorte que des données montantes comprenant des données de mesure de pression sont transmises à la partie fixe (5) par la partie mobile (14) via le canal de communication sans fil (23).

2. Dispositif de mesure selon la revendication 1, dans lequel la partie fixe (5) comporte un premier circuit de transmission comprenant le premier enroulement et dans lequel la partie mobile (14) comporte un deuxième circuit de transmission comprenant le deuxième enroulement, la partie mobile étant agencée pour moduler une impédance du deuxième circuit de transmission pour transmettre les données montantes.

3. Dispositif de mesure selon la revendication 2, dans lequel la partie mobile (14) est agencée pour recevoir des données descendantes transmises par la partie fixe (5) via le canal de communication sans fil (23), par modulation d'une impédance du premier circuit de transmission.

4. Dispositif de mesure selon la revendication 2, dans lequel le premier circuit de transmission et le deuxième circuit de transmission sont agencés pour former un premier circuit résonant ayant une fréquence de résonance égale à 13,56MHz.

5. Dispositif de mesure selon l'une des revendications précédentes, dans lequel le premier enroulement et le deuxième enroulement présentent chacun un axe de révolution confondu avec un axe de rotation (X) de la roue (3).

6. Dispositif de mesure selon l'une des revendications précédentes, dans lequel des troisièmes pistes (29) sont formées sur le premier circuit imprimé (7) et dans lequel des quatrièmes pistes (34) sont formées sur le deuxième circuit imprimé (16), les troisièmes pistes et les quatrièmes pistes définissant des motifs, le dispositif de mesure étant agencé pour produire, grâce aux motifs, un signal de mesure représentatif d'une position angulaire et/ou d'une vitesse de la roue (3).

7. Dispositif de mesure selon la revendication 6, dans lequel les troisièmes pistes définissent au moins un motif d'émission (30) et au moins un motif de mesure (31), dans lequel les quatrièmes pistes définissent au moins un motif de réception (35) et au moins un motif cible (36), le dispositif de mesure étant agencé de sorte que, lorsque le motif d'émission est excité par un signal d'excitation, un signal induit est reçu par le motif de réception puis est réémis par le motif cible, le motif de mesure captant alors le signal de mesure représentatif d'une position angulaire du motif cible, et donc du deuxième circuit imprimé (16), de la partie mobile et de la roue (3).

8. Dispositif de mesure selon la revendication 7, dans lequel le motif d'émission et le motif de réception présentent chacun un axe de révolution confondu avec l'axe de rotation de la roue.

9. Dispositif de mesure selon la revendication 6, dans lequel les motifs sont agencés pour former un deuxième circuit résonant ayant une fréquence de résonance égale à 5MHz.

**Patentansprüche**

1. Messvorrichtung zum Messen des Drucks eines Reifens (2) eines Rades (3), das auf einer Achse (4) eines Fahrzeugs gelagert ist, wobei die Messvorrichtung einen ortsfesten Teil (5) umfasst, der dazu bestimmt ist, fest mit der Achse verbunden zu werden, sowie einen beweglichen Teil (14), der dazu bestimmt ist, durch das Rad in Drehung angetrieben zu werden, **dadurch gekennzeichnet, dass** der ortsfeste Teil eine erste gedruckte Schaltung (7) umfasst, auf der mindestens eine erste Bahn (12) geformt ist, die eine erste Wicklung definiert, wobei der bewegliche Teil eine zweite gedruckte Schaltung (16) umfasst, auf der mindestens eine zweite Bahn (20) geformt ist, die eine zweite Wicklung definiert, wobei die zweite gedruckte Schaltung ausgebildet ist, mit einem Drucksensor (15) verbunden zu werden, wobei die erste Wicklung und die zweite Wicklung elektromagnetisch gekoppelt sind, um einen drahtlosen Kommunikationskanal (23) zu bilden, wobei die Messvorrichtung derart ausgebildet ist, dass der Drucksensor von dem ortsfesten Teil über den drahtlosen Kommunikationskanal (23) elektrisch gespeist wird, und derart, dass Uplink-Daten, die Druckmessdaten umfassen, von dem beweglichen Teil (14) über den drahtlosen Kommunikationskanal (23) auf den ortsfesten Teil (5) übertragen werden.

2. Messvorrichtung nach Anspruch 1, bei der der ortsfeste Teil (5) eine erste Übertragungsschaltung umfasst, die die erste Wicklung umfasst, und bei der der bewegliche Teil (14) eine zweite Übertragungsschaltung umfasst, die die zweite Wicklung umfasst, wobei der bewegliche Teil ausgebildet ist, eine Impedanz der zweiten Übertragungsschaltung zu modulieren, um die Uplink-Daten zu übertragen.

3. Messvorrichtung nach Anspruch 2, bei der der bewegliche Teil (14) ausgebildet ist, Downlink-Daten zu empfangen, die von dem ortsfesten Teil (5) über den drahtlosen Kommunikationskanal (23) übertragen werden, durch Modulation einer Impedanz der ersten Übertragungsschaltung.

4. Messvorrichtung nach Anspruch 2, bei der die erste Übertragungsschaltung und die zweite Übertragungsschaltung ausgebildet sind, eine erste Resonanzschaltung zu bilden, die eine Resonanzfrequenz gleich 13,56 MHz hat.

5. Messvorrichtung nach einem der vorhergehenden Ansprüche, bei der die erste Wicklung und die zweite Wicklung jeweils eine Revolutionsachse aufweisen, die mit einer Rotationachse (X) des Rades (3) zusammenfällt.

6. Messvorrichtung nach einem der vorhergehenden Ansprüche, bei der dritte Bahnen (29) auf der ersten gedruckten Schaltung (7) geformt sind, und bei der vierte Bahnen (34) auf der zweiten gedruckten Schaltung (16) geformt sind, wobei die dritten Bahnen und die vierten Bahnen Muster definieren, wobei die Messvorrichtung dank dieser Muster ausgebildet ist, ein Messsignal zu erzeugen, das repräsentativ für eine Winkelposition und/oder eine Geschwindigkeit des Rades (3) ist.

7. Messvorrichtung nach Anspruch 6, bei der die dritten Bahnen mindestens ein Sendemuster (30) und mindestens ein Messmuster (31) definieren, bei der die vierten Bahnen mindestens ein Empfangsmuster (35) und mindestens ein Zielmuster (36) definieren, wobei die Messvorrichtung derart ausgebildet ist, dass, wenn das Sendemuster durch ein Anregungssignal angeregt wird, ein induziertes Signal von dem Empfangsmuster empfangen und dann von dem Zielmuster erneut gesendet wird, wobei das Messmuster dann das Messsignal aufnimmt, das repräsentativ für eine Winkelposition des Zielmusters und folglich der zweiten gedruckten Schaltung (16), des beweglichen Teils und des Rades (3) ist.

8. Messvorrichtung nach Anspruch 7, bei der das Sendemuster und das Empfangsmuster jeweils eine Revolutionsachse aufweisen, die mit der Rotationsachse des Rades zusammenfällt.

9. Messvorrichtung nach Anspruch 6, bei der die Muster ausgebildet sind, eine zweite Resonanzschaltung zu bilden, die eine Resonanzfrequenz gleich 5 MHz hat.

**Claims**

1. A measurement device for measuring the pressure of a tire (2) of a wheel (3) mounted on an axle (4) of a vehicle, the measurement device comprising a stationary portion (5) for securing to the axle and a movable portion (14) for being driven in rotation by the wheel, **characterized in that** the stationary portion comprises a first printed circuit (7) having at least one first track (12) formed thereon defining a first winding, the movable portion comprising a second printed circuit (16) having at least one second track (20) formed thereon defining a second winding, the second printed circuit being arranged to be connected to a pressure sensor (15), the first winding and the second winding being coupled together electromagnetically to form a wireless communication channel (23), the measurement device being arranged in such a manner that the pressure sensor is electrically powered by the stationary portion via the wireless communication channel (23), and in such a manner that uplink data comprising pressure measurement data is transmitted to the stationary portion (5) by the movable portion (14) via the wireless communication channel (23).

2. A measurement device according to claim 1, wherein the stationary portion (5) comprises a first transmission circuit comprising the first winding and wherein the movable portion (14) comprises a second transmission circuit comprising the second winding, the movable portion being arranged to modulate the impedance of the second transmission circuit in order to transmit the uplink data.

3. A measurement device according to claim 2, wherein the movable portion (14) is arranged to receive downlink data transmitted by the stationary portion (5) via the wireless communication channel (23) by modulating the impedance of the first transmission circuit.

4. A measurement device according to claim 2, wherein the first transmission circuit and the second transmission circuit are arranged to form a first resonant circuit having a resonant frequency equal to 13.56 MHz.

5. A measurement device according to any preceding claim, wherein the first winding and the second winding both present respective axes of revolution coinciding with an axis of rotation (X) of the wheel (3).

6. A measurement device according to any preceding claim, wherein third tracks (29) are formed on the first printed circuit (7) and wherein fourth tracks (34) are formed on the second printed circuit (16), the third and fourth tracks defining patterns, the measurement device being arranged by means of the patterns to produce a measurement signal representative of the angular position and/or of the angular speed of the wheel (3).

7. A measurement device according to claim 6, wherein the third tracks define at least one emission pattern (30) and at least one measurement pattern (31), wherein the fourth tracks define at least one reception pattern (35) at least one target pattern (36), the measurement device being arranged in such a manner that, when the emission pattern is excited by an excitation signal, an induced signal is received by the reception pattern and is then re-emitted by the target pattern, the measurement pattern then picking up the measurement signal representative of an angular position of the target pattern, and thus of the second printed circuit (16) of the movable portion and of the wheel (3).

8. A measurement device according to claim 7, wherein both the emission pattern and the reception pattern present respective axes of revolution coinciding with the axis of rotation of the wheel.

9. A measurement device according to claim 6, wherein the patterns are arranged to form a second resonant circuit having a resonant frequency equal to 5 MHz.

# Fig. 1

**Fig. 2**

**Fig. 3**

Fig. 4

Fig. 5

Fig. 6

## Fig. 7

Position angulaire du motif cible (°)

## Fig. 8

**EP 3 860 867 B1**